Europäisches Patentamt

European Patent Office

Office européen des brevets

(19)

(11) Numéro de publication : **0 208 643**
**B1**

(12) # FASCICULE DE BREVET EUROPÉEN

(45) Date de publication du fascicule du brevet :
23.11.89

(51) Int. Cl.⁴ : **A 47 J 27/14, F 24 C 15/10**

(21) Numéro de dépôt : 86440045.2

(22) Date de dépôt : 06.06.86

(54) Combiné de cuisson, notamment pour un usage professionnel dans les cuisines de collectivités ou analogues.

(30) Priorité : 28.06.85 FR 8510047

(43) Date de publication de la demande :
14.01.87 Bulletin 87/03

(45) Mention de la délivrance du brevet :
23.11.89 Bulletin 89/47

(84) Etats contractants désignés :
AT BE CH DE GB IT LI LU NL SE

(56) Documents cités :
CH–A– 648 215
DE–C– 543 823
FR–A– 2 070 617
GB–A– 1 105 135
US–A– 3 167 638
US–A– 3 780 794
US–A– 3 797 377
US–A– 3 964 378
US–A– 4 024 904
US–A– 4 245 147

(73) Titulaire : **R. FRITSCH S.A. Société Anonyme dite:**
**Zone Industrielle Centre de Gros 4, rue de la Charente**
**F-68270 Wittenheim (FR)**

(72) Inventeur : **Fritsch, Norbert**
**4, rue de la Charente**
**F-68270 Wittenheim (FR)**
Inventeur : **Fritsch, Edgar**
**4, rue de la Charente**
**F-68270 Wittenheim (FR)**

(74) Mandataire : **Aubertin, François**
**Cabinet Lepage & Aubertin Innovations et Presta-**
**tions 4, rue de Haguenau**
**F-67000 Strasbourg (FR)**

Jouve, 18, rue St-Denis, 75001 Paris, France

## Description

L'invention concerne un combiné de cuisson, notamment pour un usage professionnel dans les cuisines de collectivités ou autres comprenant une cuve basculante pourvue d'un fond plat et de simple épaisseur coopérant avec un dispositif de chauffage indirect à air chaud pulsé présentant une turbine à ailettes brassant l'air d'une chambre de chauffe située sous la cuve basculante et entourée de résistances chauffantes et d'un calorifugeage isolant, cette chambre de chauffe possédant une partie supérieure ouverte débouchant sur le fond de la cuve basculante.

Dans les cuisines de collectivités ou de restaurants, trois principaux types d'ustensiles de cuisson professionnels sont utilisés, il s'agit des marmites, des friteuses et des sauteuses.

Ces différents types de récipients sont le plus souvent utilisés en fonction des aliments à cuire. Ainsi, les marmites se destinent principalement à des cuissons à l'eau, les friteuses conviennent pour tout type de friture l'huile, et les sauteuses sont utilisées pour la cuisson d'aliments dans une certaine quantité d'huile ou de graisse.

L'utilisation de trois types différents d'ustensiles conduit le plus souvent à un encombrement inutile et excessif des cuisines collectives, compte tenu du fait que tous ces ustensiles ne sont pas utilisés simultanément, certains d'entre-eux étant même utilisés uniquement à titre épisodique.

En outre, chacun des ustensiles de cuisson précités se caractérise, dans l'état actuel de la technique, par un certain nombre d'inconvénients propres. Ainsi, les marmites pour la cuisson à l'eau, telles qu'elles sont connues dans l'état actuel de la technique, sont le plus souvent constituées par un récipient relativement profond par rapport à sa section. De ce fait, son accès est difficile lors du nettoyage. De plus, afin de permettre leur lavage et leur vidange, les marmites actuellement utilisées sont raccordées, au niveau de leur fond, à des conduites de vidange qui risquent de se boucher fréquemment, ou encore, de s'ouvrir accidentellement laissant s'échapper le contenu de la marmite.

On connaît également des appareils de cuisson spécialisés pour les usagers de type professionnel, et répondant au préambule de la revendication 1 (brevet américain n° 3 797 377). Cet appareil comporte une marmite de cuisson articulée sur sa partie frontale de façon à pouvoir être basculée vers le haut pour être vidée de son contenu. Cependant, la marmite de cuisson repose directement sur des éléments chauffants portés à haute température. Il en résulte fréquemment le ferrage des aliments au fond de la marmite, c'est-à-dire leur accrochage au fond et leur dégradation, du fait de la température trop élevée.

De ce fait, les marmites et les sauteuses telles qu'elles sont utilisées actuellement, notamment dans les cuisines de collectivités, ne se prêtent pas à la préparation d'aliments fragiles, tels que des laitages ou autres, à moins de mettre en place un dispositif de bain-marie permettant d'éliminer le ferrage, mais au prix d'une perte d'énergie ou d'efficacité de la cuisson.

Quant aux friteuses utilisées actuellement dans les cuisines de collectivités, elles comportent le plus souvent à leur base une zone tronconique, selon le principe de la « zone froide ». L'huile est alors chauffée, notamment au moyen de résistances électriques placées directement dans l'huile au-dessus de ladite zone froide. De ce fait, l'huile est portée directement à haute température par l'intermédiaire des résistances chauffantes et, par conséquent, se dégrade rapidement, ce qui aboutit au niveau de la zone froide ou zone de décantation, à un dépôt particulièrement peu hygiénique d'huile carbonisée et de déchets de friture.

Par ailleurs, on connaît, par le document US-A-3 167 638, des plaques chauffantes de cuisson basées sur le principe de transfert de chaleur par convexion d'air chaud, cette convexion étant de type forcé. Un ventilateur, placé sous la plaque chauffante, permet de créer une circulation d'air. L'air aspiré par le ventilateur est dirigé vers des résistances chauffantes électriques, puis soufflé en direction du fond de la casserole disposée sur cette plaque chauffante. Cet air est ensuite à nouveau aspiré par le ventilateur et le cycle recommence. Ce ventilateur permet également de créer une circulation d'air de refroidissement des plaques. Dans ce cas, il suffit de ne plus alimenter en énergie les résistances chauffantes électriques et d'ôter la casserole du dessus de la plaque chauffante.

Toutefois, non seulement l'air de chauffage suit un circuit fort complexe nécessitant un aménagement particulier, mais, en plus, les casseroles, disposées sur ces plaques chauffantes, sont en contact avec de nombreuses parties métalliques chauffées par la circulation d'air. Ainsi, la montée en température est variable du fait qu'elle est tributaire du contact ou non des parties métalliques chauffées et le fond de la casserole et on risque une surchauffe locale pouvant provoquer l'attachement des aliments aux emplacements de cette surchauffe locale.

La présente invention a pour but de remédier à ces inconvénients. L'invention, telle qu'elle est caractérisée dans la revendication, résout le problème consistant à créer un combiné de cuisson, notamment pour un usage professionnel dans les cuisines de collectivités ou autres comprenant une cuve basculante pourvue d'un fond plat et de simple épaisseur coopérant avec un dispositif de chauffage indirect à air chaud pulsé présentant une turbine à ailettes brassant l'air d'une chambre de chauffe située sous la cuve basculante et entourée de résistances chauffantes et d'un calorifugeage isolant, cette chambre de chauffe possédant une partie supérieure ouverte débouchant sur le fond de la cuve basculante et comportant une goulotte périphérique coopérant avec un rebord périphérique aménagé sur le fond de la cuve basculante et formant, avec ledit rebord périphérique, une chicane d'étanchéité thermique entre la chambre de chauffe et le fond de la cuve basculante.

Les avantages obtenus grâce à cette invention consistent essentiellement en ceci que le chauffage se faisant de manière indirecte, le combiné de cuisson permet une montée en température uniforme et sans ferrage des aliments, ainsi que la préparation d'aliments même fragiles, tels que les aliments à base de laitages. En outre, ces avantages se combinent avec un fonctionnement à haut rendement énergétique. De ce fait, cet appareil de cuisson se prête, selon le cas, à des cuissons à l'eau, à l'huile ou à la graisse, ou à des opérations de friture, tout en permettant une mise en œuvre des aliments bien plus hygiénique que celle des ustensiles professionnels actuellement connus, grâce à l'utilisation du moyen de chauffage indirect.

L'invention est exposée ci-après plus en détail à l'aide d'un dessin représentant seulement un mode d'exécution.

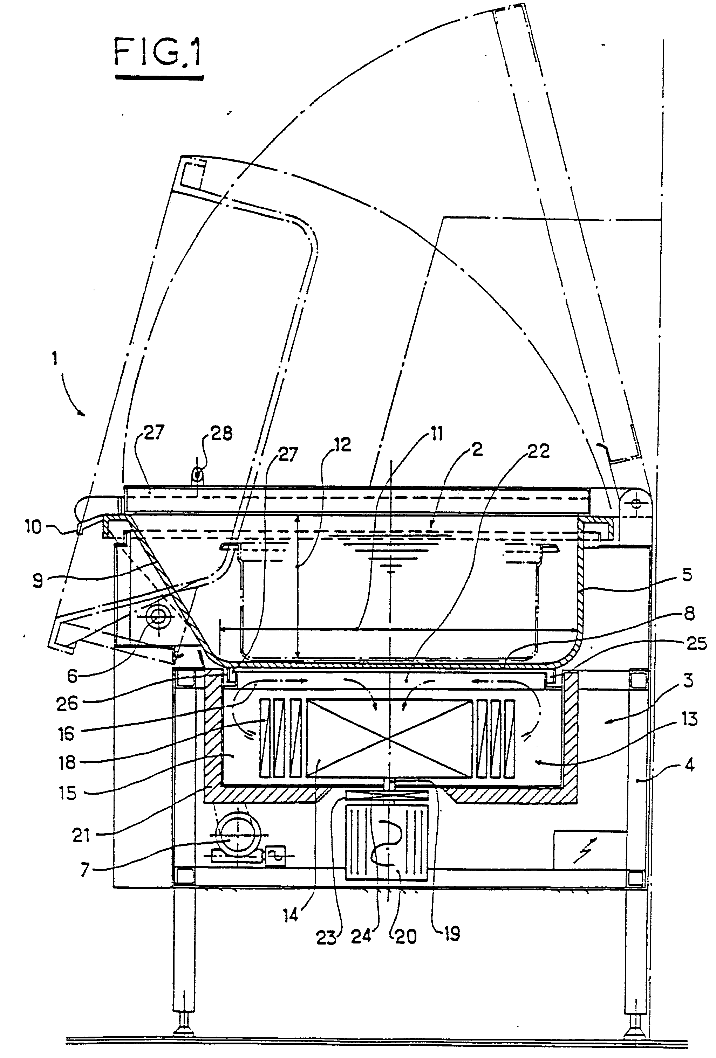

La figure 1 représente, en vue en élévation et en coupe, le combiné de cuisson conforme à l'invention.

Le combiné de cuisson 1 conforme à l'invention se compose principalement d'un contenant 2 destiné à recevoir les aliments à cuire, et d'un dispositif de chauffage 3 situé sous le contenant 2, l'ensemble étant monté, de façon classique, sur un châssis 4.

Selon l'invention, le contenant 2, destiné à être utilisé suivant le cas, en marmite, en sauteuse ou en friteuse, est constitué par une cuve basculante 5, mobile autour d'un axe d'articulation 6. Selon une réalisation préférentielle de l'invention, l'axe d'articulation 6 est actionné en rotation soit manuellement, soit par des moyens moteurs quelconques, tels qu'un moto-réducteur 7, afin de permettre une vidange par basculement vers le haut, de la cuve basculante 5, comme représenté en traits mixtes sur la figure 1.

De cette façon, l'accès à l'intérieur de la cuve basculante 5 à des fins de vidange ou de nettoyage s'en trouve grandement facilité, ceci sans nécessiter la connexion d'une conduite de vidange sur la cuve, comme c'est fréquemment le cas pour les ustensiles de cuisson connus dans l'état actuel de la technique.

En outre, le combiné de cuisson 1 selon l'invention se prête à des usages multiples, notamment en tant que sauteuse, friteuse ou marmite.

A cet effet, la cuve basculante 5 possède, selon une réalisation préférentielle de l'invention, une forme sensiblement cylindrique, assortie d'un fond plat 8 et d'une avancée 9 se terminant par un bec verseur 10.

Afin de permettre un bon échange thermique avec le dispositif de chauffage 3 et ceci quelle que soit l'utilisation, le fond plat 8 de la cuve basculante 5 possède un diamètre 11 sensiblement supérieur à la hauteur 12 de celle-ci, ce qui améliore en outre la facilité d'accès au contenu de la cuve basculante 5.

Cependant, cette caractéristique ne suffit pas à elle seule, à conférer au combiné de cuisson 1 selon l'invention, la faculté de remplacer une friteuse, une marmite et une sauteuse.

En effet, un dispositif de chauffage classique, à base de brûleurs ou de résistances chauffantes tels que connus dans l'état actuel de la technique, et associé à la cuve basculante 5, ne permettrait pas d'éliminer les inconvénients liés au ferrage des aliments, ni la dégradation de l'huile pendant l'utilisation en friteuse. De ce fait, les dispositifs de chauffage utilisés de façon classique dans les cuisines professionnelles et associés à la cuve basculante 5 selon l'invention, ne permettraient de réaliser que partiellement les buts précédemment attribués à l'invention.

Par conséquent le dispositif de chauffage 3 du combiné de cuisson 1 selon l'invention, est de préférence constitué par un ensemble de chauffage indirect 13 à air chaud pulsé, le chauffage de l'air pulsé étant, quant à lui, obtenu à l'aide d'un combustible quelconque approprié.

L'ensemble de chauffage indirect 13 à air chaud pulsé est notamment constitué par une turbine à ailettes 14 qui brasse l'air de la chambre de chauffe 15 située sous la cuve basculante 5, de façon à obtenir un circuit d'air pulsé 16 de température uniforme.

Le chauffage de cet air pulsé est obtenu par des moyens quelconques, et de façon préférentielle, par des résistances chauffantes 18 entourant la turbine à ailettes 14 et permettant de porter la température de l'air pulsé de la chambre de chauffe 15 à une valeur de l'ordre de 200 à 300 degrés Celsius.

La turbine à ailettes 14 est entraînée en rotation par l'intermédiaire d'un axe d'entraînement 19 actionné par un 5 moteur 20.

Bien entendu, il est nécessaire d'entourer la chambre de chauffe 15 de moyens de calorifugeage, afin d'éviter les pertes de chaleur par contact avec l'air ambiant et de canaliser la puissance thermique disponible, uniquement vers le fond 8 de la cuve basculante 5.

A cet effet, la chambre de chauffe 15 est entourée d'un calorifugeage isolant 21 (tel que laine de verre ou autres), à l'exception de sa partie supérieure 22 ouverte et débouchant sur le fond 8 de la cuve basculante 5, et de sa partie inférieure 23 correspondant au passage de l'axe d'entraînement 19 connecté au moteur 20.

Il est à noter à ce sujet que ledit axe d'entraînement 19 est de préférence pourvu d'une turbine de refroidissement 24 permettant de refroidir cet axe d'entraînement 19, afin d'éviter que la chaleur régnant dans la chambre de chauffe ne vienne, par conduction, surchauffer le moteur 20.

La partie supérieure 22 de la chambre de chauffe 15, qui débouche sur le fond 8 de la cuve basculante 5, est pourvue d'une goulotte périphérique 25, coopérant avec un rebord périphérique 26 aménagé sur le fond 8 de la cuve basculante 5. Ainsi, ladite goulotte périphérique 25 et ledit rebord périphérique 26 forment une chicane 27 permettant d'assurer l'étanchéité thermique entre la chambre de chauffe 15 et le fond 8 de la cuve basculante 5.

Bien entendu, l'équipement du combiné de cuisson 1 est judicieusement complété par un couvercle 28 rabattable et articulé obturant la cuve basculante 5 pendant la cuisson, et par une conduite d'alimentation en eau 29, souple et escamotable, afin d'éviter toute fuite d'eau éventuelle dans la cuve basculante 5, notamment pendant l'utilisation de cette dernière en friteuse. Compte tenu de la grande surface d'échange présentée par le fond 8 de simple épaisseur, le combiné de cuisson 1 selon l'invention supprime la nécessité du bain-marie ou d'une double paroi et ceci, même pour la cuisson des aliments les plus fragiles.

**Revendication**

Combiné de cuisson (1), notamment pour un usage professionnel dans les cuisines de collectivités ou autres comprenant une cuve basculante (5) pourvue d'un fond (8) plat et de simple épaisseur coopérant avec un dispositif (3) de chauffage indirect (13) à air chaud pulsé présentant une turbine à ailettes (14) brassant l'air d'une chambre de chauffe (15) située sous la cuve basculante (5) et entourée de résistances chauffantes (18) et d'un calorifugeage isolant (21), cette chambre de chauffe (15) possédant une partie supérieure (22) ouverte débouchant sur le fond (8) de la cuve basculante (5), caractérisé en ce que la partie supérieure (22) de la chambre de chauffe (15) comporte une goulotte périphérique (25) coopérant avec un rebord périphérique (26) aménagé sur le fond (8) de la cuve basculante (5) et formant, avec ledit rebord périphérique (26), une chicane (27) d'étanchéité thermique entre la chambre de chauffe (15) et le fond (8) de la cuve basculante (5).

**Claim**

Cooking unit (1), especially for large-scale kitchens or the like, comprising a tiltable container (5), provided with a flat base (8) and having a small thickness, cooperating with a heating device (3), heating being effected indirectly (13) by means of hot-air pulsation, having a vane type turbine (14) stirring the air of a heating chamber (15) located under the tiltable container (5) and surrounded by heating resistors (18) and thermal insulation (21), this heating chamber (15) having an open upper part (22) opening on to the base (8) of the tiltable container (5), characterised in that the upper part (22) of the heating chamber (15) comprises a peripheral channel (25) cooperating with a peripheral rim (26) provided on the base (8) of the tiltable container (5), and forming, together with the said peripheral rim (26), a thermal baffle seal (27) between the heating chamber (15) and the base (8) of the tiltable container (5).

**Patentanspruch**

Kochvorrichtung (1), insbesondere für Grossküchen oder dergleichen, die einen kippbaren Kessel (5) umfasst, der mit einem flachen und einzelwandigen Boden (8) versehen ist, der mit einem Warmluftheizgerät (13) zusammenwirkt das eine Schaufelturbine (14) aufzeigt, von der die Luft in einer Heizkammer (15) durchwirbelt wird, die sich unter dem kippbaren Kessel (5) befindet und von Heizwiderständen (18) und einer Wärmeisolation (21) umgeben ist, wobei diese Heizkammer (15) einen offenen oberen Teil (22) aufzeigt, der am Boden (8) des kippbaren Kessels (5) mündet, dadurch gekennzeichnet, dass der obere Teil (22) der Heizkammer (15) eine periphere Rinne (25) aufzeigt, die mit einem peripheren Rand (26) zusammenwirkt, der am Boden (8) des kippbaren Kessels (5) angebracht ist und die zusammen mit dem vorerwähnten peripheren Rand (26) ein Wärmeschirmblech zwischen der Heizkammer (15) und dem Boden (8) des kippbaren Kessels (5) bildet.

# FIG.1